# EUROPEAN PATENT SPECIFICATION

(11) **EP 3 479 503 B1**
(45) Date of publication and mention of the grant of the patent: **11.11.2020**
(21) Application number: 16742428.2
(22) Date of filing: 01.07.2016
(51) Int. Cl.: H04B 17/00, H04B 17/29, H04B 17/391

(54) **OVER THE AIR TESTING OF A RADIO COMMUNICATIONS DEVICE**
PRÜFUNG EINER FUNKKOMMUNIKATIONSVORRICHTUNG ÜBER FUNK
TEST PAR RADIO D'UN DISPOSITIF DE COMMUNICATIONS RADIO

(43) Date of publication of application: 08.05.2019
(73) Proprietor: Telefonaktiebolaget LM Ericsson (publ), 164 83 Stockholm (SE)
(72) Inventor: CHAPMAN, Thomas, 171 50 Solna (SE); LARSSON, Magnus, 192 51 Sollentuna (SE); SVENSSON, Rickard, 168 68 Bromma (SE); HUSS, Fredrik, 174 55 Sundbyberg (SE)
(74) Representative: Zacco Sweden AB
(86) International application number: PCT/SE2016/050680
(87) International publication number: WO 2018/004411

(56) References cited:
- GB-A- 2 440 165
- US-A1- 2012 275 506
- US-A1- 2014 266 929

## Description

### TECHNICAL FIELD

Embodiments presented herein relate to methods, a signal generator, a radio communications device, computer programs, and a computer program product for over the air testing of the radio communications device.

### BACKGROUND

In communications networks, there maybe a challenge to obtain good performance and capacity for a given communications protocol, its parameters and the physical environment in which the communications network is deployed.

For example, some 3rd Generation Partnership Project (3GPP) telecommunications specifications include requirements on so-called "demodulation" or "performance" for the network base stations and for wireless transceiver devices. In the Long Term Evolution (LTE) specifications the requirements are referred to as "performance" and in Universal Terrestrial Radio Access (UTRA) specifications the requirements are referred to as "demodulation". The requirements will hereinafter be collectively denoted by demodulation requirements, unless explicitly specified.

In general terms, the demodulation requirements specify a minimum expected performance for specified physical layer channels under specified propagation conditions. The performance may be expressed in terms of throughput or some other criteria such as missed detection or false detection rates, depending on the channel for which demodulation performance is to be assessed. Requirements are specified for demodulation of most of the High Speed Packet Access (HSPA) and LTE control and data channels.

In general terms, the demodulation requirements on the base station are today tested by connecting a signal generator to the radio frequency (RF) antenna connectors of the base station under test. The signal generator is configured to generate the physical radio propagation channel to be tested, modify this channel according to the propagation model in a manner specific to each connector, and add noise, such as additive white Gaussian noise (AWGN) to the resulting signals in order to set a signal to interference plus noise ratio (SINR) level as captured in the specifications of the demodulation requirements. The signal and noise levels are specified such that they are well above the reference sensitivity requirement on the base station and are within the supported RF dynamic range. By specifying the signals at this level, the signals are not much impacted by the base station RF front end. In this way, the performance of the baseband algorithms that perform combining and demodulation are captured. Hereinafter the term channel will, unless otherwise specified, refer to the physical radio propagation channel and its properties.

Base station demodulation requirements are currently specified for 1, 2, 4 or 8 receiver connectors. In requirements where more than one connector are to be tested, the signal generator must generate multiple outputs with multiple fading channels.

The existing testing strategy relies on antenna connectors being provided at the device under test (i.e., either base station or wireless transceiver device). For existing frequency bands and with a low number of receivers, provision of antenna connectors is not an issue. However if the number of receivers is increased, then provision of antenna connectors is likely to drive cost and performance. Furthermore, at higher frequency bands (such as at millimeter waves), antennas and radio circuits should be closely integrated and provision of antenna connectors is likely to be cumbersome or even impossible.

Recently, a new 3GPP specification, 3GPP TS 37.105 denoted "Active Antenna System (AAS) Base Station (BS) transmission and reception" has been developed. The specification introduces Over the Air (OTA) testing of some requirements. OTA testing implies that signals radiated from the base station antennas are measured in order to assess conformance to requirements (or signals are radiated to base station antennas in the uplink). Specifically, radiated requirements on equivalent isotropically radiated power (EIRP) and equivalent isotropic sensitivity (EIS) have been introduced. All other requirements remain specified as conducted requirements, including the demodulation/performance requirements. However, it could be beneficial to specify all requirements (for both base stations and wireless transceiver devices) as OTA requirements.

Hence, there is a need for efficient over the air testing of a radio communications device.

Examples of prior arts may be found in US 2014/266929 A1 that relates to system and method to facilitate wireless testing of a radio frequency (RF) multiple-input, multiple-output (MIMO) signal transceiver device under test (DUT); US 2012/275506 A1 that relates to a method and an apparatus for testing Total Isotropic Sensitivity (TIS) in a multi-antenna Multiple Input Multiple Output (MIMO) system in the field of radiation performance test technology of wireless communication terminal products; and GB 2440165 A that relates to a real-time signal generation apparatus used to test a radio receiver having N receive antennas (N>1), the apparatus includes M digital sources emulating an output of a respective radio transmitter and N groups of fading simulators.

### SUMMARY

The invention is defined by the independent claims. The subject matter disclosed below in the description and going beyond the scope of the claims should be considered as examples and not embodiments even if words like "embodiment" or "invention" are used in connection thereto.

An object of embodiments herein is to provide efficient over the air testing of a radio communications device.

### BRIEF DESCRIPTION OF THE DRAWINGS

The inventive concept is now described, by way of example, with reference to the accompanying drawings, in which:
Fig. 1 is a schematic diagram illustrating a test facility according to an embodiment;
Figs. 2 and 3 are schematic diagrams illustrating details of a signal generator and a radio communications device according to embodiments;
Fig. 4 is a schematic diagram illustrating details of a radio communications device according to an embodiment;
Figs. 5, 6, 7, 8, 9, 10, and 11 are flowcharts of methods according to embodiments;
Fig. 12 is a schematic diagram showing functional units of a signal generator according to an embodiment;
Fig. 13 is a schematic diagram showing functional modules of a signal generator according to an embodiment;
Fig. 14 is a schematic diagram showing functional units of a radio communications device according to an embodiment;
Fig. 15 is a schematic diagram showing functional modules of a radio communications device according to an embodiment; and
Fig. 16 shows one example of a computer program product comprising computer readable means according to an embodiment.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

Currently conducted testing (i.e. direct connection of the signal generator and the antenna connector(s) of the base station) is used for demodulation requirements. However with larger numbers of transmit and receive antennas as well as receiver units, the complexity of conducted testing and modelling of independent channels increases. More and more channel simulators are needed as the number of base station receiver inputs increase from 2, 4 or 8 to 34, 64, 128 and more in AAS.

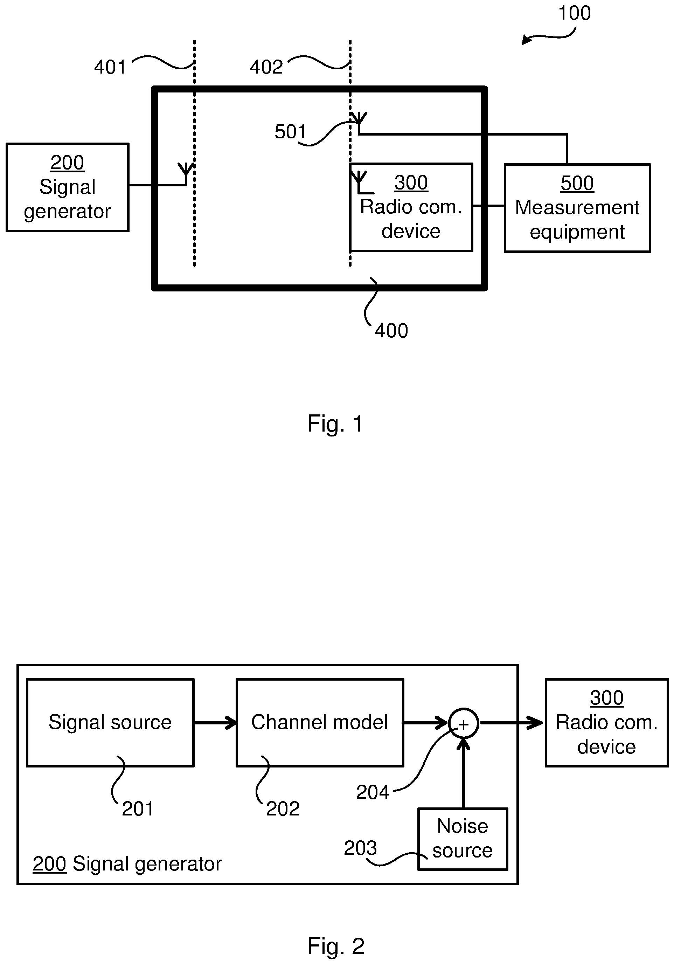

Fig. 1 schematically illustrates a test facility 100 for OTA testing of a radio communications device 300 by means of a signal generator 200. In the illustrative example of Fig. 1 the radio communications device 300 is operatively connected to optional measurement equipment 500 having its own reference antenna 501. At reference numeral 401 is schematically illustrated the phase center of the transmitting antenna of the signal generator 200 and at reference numeral 402 is schematically illustrated the phase center of the receiving antenna (or antennas) of the radio communications device 300. In general term, the test facility is a test facility with controllable echo. For example, the test facility could be an anechoic chamber, a compact antenna test range, a near-field test facility, a far-field test facility, or an outdoor test facility. According to one specific example the test (i.e., the transmission and reception of the test signals) is carried out in an anechoic chamber in the far field, for example using a Compact Antenna Test Range (CATR).

OTA testing is highly difficult and complex, especially when the need to simulate multipath fading channels in a controlled manner is considered. Current mechanisms for OTA testing of wireless devices do not necessarily scale to OTA testing of base stations due to larger amounts of transmitter power, different test object sizes, etc.

Currently, there is no technical means to support OTA testing of demodulation requirements for base stations, and the possibilities for OTA testing of wireless transceiver devices are limited.

The embodiments disclosed herein therefore relate to mechanisms for over the air testing of a radio communications device 300. In order to obtain such mechanisms there is provided a signal generator 200, a method performed by the signal generator 200, a computer program product comprising code, for example in the form of a computer program, that when run on processing circuitry of the signal generator 200, causes the signal generator 200 to perform the method. In order to obtain such mechanisms there is further provided a radio communications device 300, a method performed by the radio communications device 300, and a computer program product comprising code, for example in the form of a computer program, that when run on processing circuitry of the radio communications device 300, causes the radio communications device 300 to perform the method.

Fig. 2 schematically illustrates details of a signal generator 200 which together with a radio communications device 300 could be used in the test facility 100 for OTA testing of the radio communications device 300. The signal generator 200 comprises a signal source 201. The signal source may, for example, be configured to generate signals comprising inphase and quadrature (IQ) samples. The signals generated by the signal source 201 are subjected to a channel model 202. The channel model 202 processes the signals generated by the signal source 201 according to a multipath propagation channel model. The channel model 202 could be represented by a fading channel simulator. The fading channel simulator could be configured to generate an independent fading channel for each combination of transmitter (in the signal generator 200) and receiver unit (in the radio communications device 300). In case transmitter antenna correlation is modelled, then the channel simulator could apply an appropriate summation of channel models for different transmit antennas to obtain the desired degree of correlation. Noise is added to the thus modulated signals by a noise source 203 before OTA transmission to the radio communications device 300.

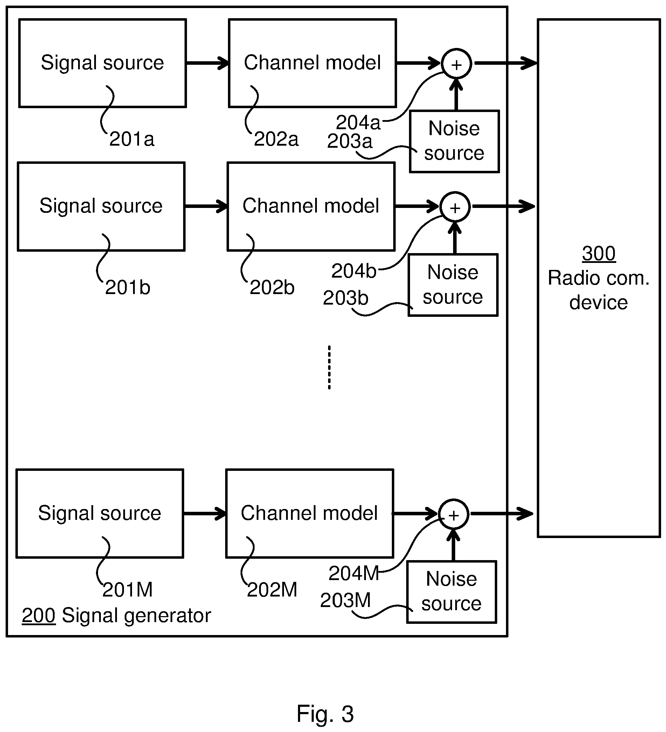

Fig. 3 schematically illustrates details of a signal generator 200 which together with a radio communications device 300 could be used in the test facility 100 for OTA testing of the radio communications device 300. The signal generator of Fig. 3 is similar to the signal generator of Fig. 2 but instead of comprising a single signal source, a single channel model, and a single noise source, the signal generator of Fig. 2 comprises M>1 signal sources 201a, 201b, ..., 201M, channel models 202a, 202b, ..., 202M, and noise sources 203a, 203b, ..., 203M. M could be in the order of 16, 32, 64, 128, 256, 512, or 1024.

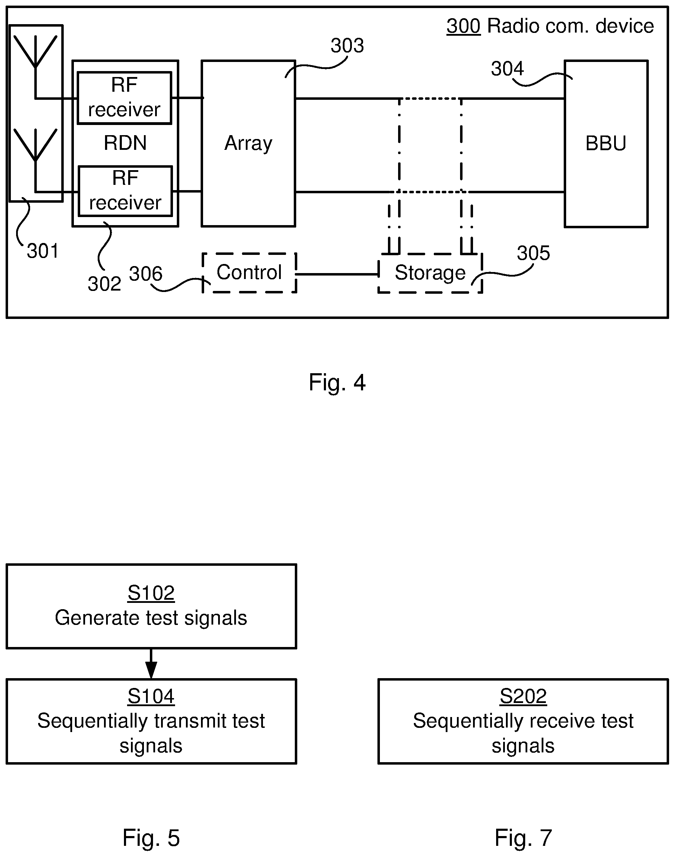

Fig. 4 schematically illustrates details of a radio communications device 300 which could be used in the test facility 100 for OTA testing of the radio communications device 300. The radio communications device 300 comprises an antenna array 301 comprising at least one antenna element, a Radio Distribution Network (RDN) 302 comprising at least one radio frequency (RF) transceiver, a Transceiver Unit Array (TUA) 303 and a Baseband unit (BBU) 304. The antenna array 301 may comprise multiple radiating antenna elements for transmitting and receiving electromagnetic signals over the air. The signals transmitted to, or from, each antenna element are distributed to the antenna elements via the RDN 302. The RDN 302 could be a passive linear network of splitters and combiners. The RDN 302 could provide a 1:1 mapping between receive antennas and transmitter units. The RDN 302 is described in this way for simplicity of description, however as understood by the skilled person, other types of RDN mappings are also possible. The TAU 303 comprises a group of transmitters/receivers configured to convert IQ signals into analogue signals (and vice versa). The BBU 304 is configured to perform adaptive combining and demodulation.

Optionally, a storage facility 305 for collecting and storing data is provided at an interface between the TUA303 and the BBU 304. Thereby, signals that are received by the TUA 303 from the antenna array 301 could be stored in the storage facility 305 before being fed to the BBU 304. In one embodiment the storage facility 305 is internal to the radio communications device 300 and in another embodiment the storage facility 305 is external to the radio communications device 300. Whether to store or not to collect and store data is controlled by a control unit 306. In this respect, when controlled to collect and store data, signals are passed from the TUA 303 to the storage facility 305 via dash-dotted lines and then from the storage facility 305 to the BBU 304 via dash-dotted lines, whereas when controlled to not collect and store data, signals are passed directly from the TUA 303 to the BBU 304 via dotted lines.

Further optionally, the radio communications device 300 is provided with so-called Transceiver Array Boundary connectors for coupled testing of the radio communications device 300.

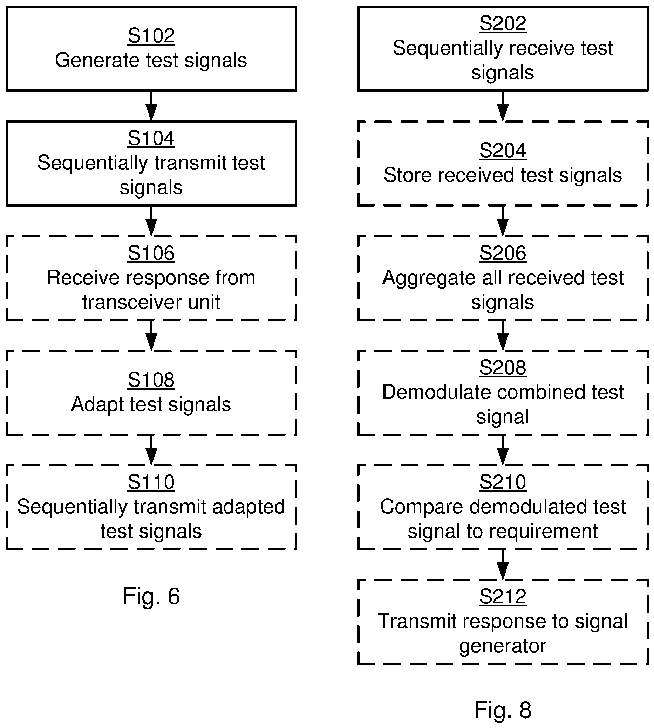

Figs. 5 and 6 are flow charts illustrating embodiments of methods for over the air testing of a radio communications device 300 as performed by the signal generator 200. Figs. 7 and 8 are flow charts illustrating embodiments of methods for over the air testing of a radio communications device 300 as performed by the radio communications device 300. The methods are advantageously provided as computer programs 1620a, 1620b.

Reference is now made to Fig. 5 illustrating a method for over the air testing of a radio communications device 300 as performed by the signal generator 200 according to an embodiment.

At least some of the herein disclosed embodiments are based on buffering IQ samples, or similar data, to convert parallel multipath fading channels into a serial time multiplexed sequence. The signal generator 200 is therefore configured to generate test signals according to step S102:
S102: The signal generator 200 generates a respective test signal for each receiver unit of the radio communications device 300. Each test signal is independently modulated according to a multipath propagation channel model. In this respect, the term generate should be interpreted as encompassing the signal generator 200 obtaining the respective test signals from a bank of pre-recorded test signals. The bank of pre-recorded test signals could be stored in a storage being either internal or external to the signal generator 200.
S104: The signal generator 200 sequentially, and for all the receiver units of the radio communications device 300, transmits the test signals over the air.

A single channel simulator for all transmitters represented by the signal generator 200 and all receiver units of the radio communications device 300 can thereby be used for the device under test (i.e., for the radio communications device 300) independent of how many receiver channels for the receiver units the radio communications device 300 can handle. This is significant since the number of receiver unit in the radio communications device 300 could be from 2, 4, 8 to 32, 64, 128 or more. This will allow for OTA testing of demodulation requirements using a simple test facility.

Embodiments relating to further details of over the air testing of a radio communications device 300 as performed by the signal generator 200 will now be disclosed.

The plurality of receiver units may be all the receiver units of the radio communications device 300. Further, the test signals could be generated for each antenna element of the radio communications device 300, and thus the test signals could be sequentially transmitted over the air for all the antenna elements.

There may be different ways for the signal generator 200 to compose the test signal. For example, the signal generator 200 could add several transmitter signals before transmitting the test signals. In this respect the signal generator 200 may comprise only a single transmitter (or even a single antenna element) but be configured to generate test signals representing two or more transmitters (or antenna elements) and thus represent two or more transmitters (or antenna elements) during the test of the radio communications device 300. Hence, when referring to transmitter or transmitters of the signal generator 200 it is to be understood that this transmitter or these transmitters may refer to a single physical transmitter of the signal generator 200 but where the test signals could be generated so as to represent one or more transmitters. According to a first embodiment each respective test signal is an aggregated test signal representing a test signal contribution from at least two transmitters. According to a second embodiment each respective test signal represents a test signal contribution from a single transmitter out of at least two transmitters (as represented by the test signals generated by the signal generator 200). The test signals are then sequentially transmitted for each combination of receiver unit of the radio communications device 300 and transmitter (as represented by the test signals generated by the signal generator 200). Further, according to any of these embodiments each test signal could be independent for each pair of transmitter and receiver unit. In this respect, each transmitter might represent a respective antenna element. The procedure for modelling the multipath propagation channel between a single transmitter and a single receiver unit could thus be repeated multiple times; for example once for each each combination of transmitter and receiver unit of the radio communications device 300.

Further, the test signal might represent correlation in either the transmitter or the receiver (i.e., of the radio communications device 300). Transmitter correlation can be modelled by the signal generator 200 using a correlation model in addition to the fading channel model in a similar manner to the means by which transmitter correlation is captured for conducted demodulation requirements. Hence, according to a first embodiment each test signal is independently modulated according to a correlation model capturing transmitter correlation. Receiver correlation generally depends on the design of the radio communications device 300 and might therefore not be captured using a single value in a specification. In general, signal contributions form the receiver units in the radio communications device 300 are more likely to be uncorrelated, in which case the method can be applied directly as described above for transmitter correlation such that the transmitted signals already represent receiver correlation. This of course requires the test generator 200 to know how much receiver correlation there is. Hence, according to a second embodiment each test signal is independently modulated according to a coupling, and/or combining model capturing antenna spacing, antenna correlation, and/or properties of the RDN 302. The first embodiment does not rule out the second embodiment, and vice versa. Hence, each test signal could be independently modulated according to a correlation model capturing transmitter correlation and/or receiver correlation.

The herein disclosed embodiments easily scale to testing of transmission from multiple points by means of increasing the amount of transmitters represented by the test signals generated by the signal generator 200 and transmitted for each receiver antenna in the radio communications device 300. The test signals can represent transmitters at different physical locations that transmit signals to the radio communications device 300. Thus, the embodiments allow for testing of interference rejection, etc.

Reference is now made to Fig. 6 illustrating methods for over the air testing of a radio communications device 300 as performed by the signal generator 200 according to further embodiments. It is assumed that steps S102, S104 are performed as described with reference to Fig. 5 and a thus repeated description thereof is therefore omitted.

Hybrid automatic repeat request (HARQ) can be supported, for example if one HARQ round trip time of a test signal is transmitted at a time for each combination of transmitter and receiver unit in the radio communications device 300. Then the whole procedure of multiple transmissions can be repeated for multiple HARQ periods, taking into account HARQ feedback. Hence, according to an embodiment the signal generator 200 is configured to perform step S106:
S106: The signal generator 200 receives a response from the radio communications device 300. The response comprises an Acknowledgement (ACK) protocol message or a Negative Acknowledgement (NACK) message.

The ACK and NACK protocol messages represent feedback. The signal generator 200 then adapts the test signals according to the received feedback and is according to the present embodiment configured to perform step S108:
S108: The signal generator 200 adapts the respective test signal according to the received response.

Once the test signals (or at least at least one of the test signals) have been adapted, the signal generator 200 then transmits adapted test signals and is according to the present embodiment configured to perform step S110:
S110: The signal generator 200 sequentially, and for all the receiver units of the radio communications device 300, transmits adapted test signals over the air.

In other aspects the test signals are generated as in step S102.

Reference is now made to Fig. 7 illustrating a method for over the air testing of a radio communications device 300 as performed by the radio communications device 300 according to an embodiment. It can for illustrative purposes be assumed that the signal generator 200 transmits test signals as in step S106. Hence, the radio communications device 300 is configured to perform step S202:
S202: The radio communications device 300 sequentially receives a respective test signal for each receiver unit of the radio communications device 200 over the air from the signal generator 200. Each respective test signal is independently modulated according to a multipath propagation channel model.

Embodiments relating to further details of over the air testing of a radio communications device 300 as performed by the radio communications device 300 will now be disclosed.

As disclosed above there may be different ways for the signal generator 200 to compose the test signal. Hence, depending on how the signal generator 200 composes the test signals the test signals received by the radio communications device in step 202 may have different properties. According to a first embodiment each respective test signal is an aggregated test signal representing a test signal contribution from at least two transmitters. According to a second embodiment each respective test signal represents a test signal contribution from a single transmitter out of at least two transmitters, wherein the test signals are sequentially received for each combination of receiver unit of the radio communications device 300 and transmitter. Further, according to any of these embodiments each test signal could be independent for each pair of transmitter and receiver unit of the radio communications device 300.

As noted above, according to an embodiment the test signal models correlation in the radio communications device 300. In this respect, the antenna elements and/or receiver branches used by the receiver units of the radio communications device 300 have some level of correlation, then the correlation could be defined according to a specification by the vendor of the radio communications device 300. Stored receiver streams could then be manipulated as defined by the specification in order to capture the receiver correlation. This can, for instance, be achieved by summing up the stored input signals with different weights to create new correlated signals and feed the new signals to the demodulator. Hence, according to an embodiment the received test signals are in the radio communications device 300 added using weights representing correlation in the receivers of the radio communications device 300.

In order to perform demodulation testing, the radio communications device 300, when being represented by a base station, could be set in an uplink receive only mode and having its scheduling functionality disabled. Hence, according to an embodiment the radio communications device 300 is set in an uplink receive only mode, and the radio communications device 300 has its scheduling functionality disabled when sequentially receiving the respective test signal.

Reference is now made to Fig. 8 illustrating methods for over the air testing of a radio communications device 300 as performed by the radio communications device 300 according to further embodiments. It is assumed that steps S202 is performed as described with reference to Fig. 5 and a thus repeated description thereof is therefore omitted.

There may be different ways for the transceiver device 300 to handle and process the test signals received in step S202. For example, the transceiver device 300 can facilitate storage of the received test signals. In this respect the radio communications device 300 in some embodiments stores the received test signals internally and in some embodiments stores the received test signals externally. In the former, the radio communications device 300 may be equipped with storage capability to receive and store samples from one of the receiver units during each iteration of the transmission procedure. Hence, according to an embodiment the radio communications device 300 is configured to perform step S204:
S204: The radio communications device 300 stores each respective sequentially received test signal.

Once samples have been collected for every combination of transmitter and receiver unit, the samples that are received from multiple transmitters (as represented by the test signals) at receiver unit are added (since these samples represent arriving signals that combine over the air). The samples for each receiver unit are then demodulated. Hence, in an embodiment where each respective test signal represents a test signal contribution from a single transmitter out of at least two transmitters, and the test signals are sequentially received for each combination of receiver unit and transmitter, the radio communications device 300 thus is configured to perform step S206:
S206: The radio communications device 300 aggregates all received test signals from each transmitter into an aggregated test signal.

If the test signals have already been aggregated in the signal generator 200, and thus the received test signals represent aggregated test signals. Then aggregating as disclosed in step S206 does not need to be performed by the radio communications device 300. Once having obtained aggregated test signals the radio communications device 300 demodulates the aggregated test signals by being configured to perform step S208:
S208: The radio communications device 300 demodulates the aggregated test signals. In this respect the radio communications device 300 could be implemented to combine all aggregated test signals in parallel such that signal contributions for such demodulated test signals are received and demodulated according to intended receiver operation of the radio communications device 300.

In this respect, the term aggregating refers e.g., to adding test signals, possibly with adjustment for transmitter or receiver correlation; the term combining refers e.g., to processing of signals such as interference rejection combining (IRC), maximum ratio combining (MRC) or multiple input multiple output (MIMO) layer extraction (possibly together with forward error correction (FEC) decoding, de-interleaving and other steps needed for data extraction) included in the performance to be tested, and the term demodulation refers e.g., to the identification of constellation points and thus extraction of encoded digital information, possibly together with minimum mean square error (MMSE) combining of multiple schemes as well as FEC decoding.

Throughput can be evaluated at the output of the demodulation in order to assess whether the demodulation requirement has been passed. Hence, according to an embodiment the radio communications device 300 is configured to perform step S210:
S210: The radio communications device 300 facilitates comparison of the demodulated test signal to a demodulation requirement. Demodulation requirements can be defined in terms of block error rate (BLER) of the test signal. In this respect the actual comparison may be performed in the radio communications device 300 itself or external to the radio communications device 300.

As disclosed above, HARQ can be supported. Hence, according to an embodiment the radio communications device 300 is configured to perform step S212:
S212: The radio communications device 300 transmits a response to the signal generator 200 when having demodulated the aggregated test signals. The response comprises an ACK protocol message or a NACK protocol message. The response (i.e., whether to transmit an ACK protocol message or a NACK protocol message) is dependent on the demodulated aggregated test signals. If the aggregated test signals have been successfully demodulated then an ACK protocol message is transmitted in step S112 and otherwise (for example if at least one of the aggregated test signals have not been successfully demodulated) then a NACK protocol message is transmitted in step S112.

Embodiments relating to both the signal generator 200 and the radio communications device 300 will now be disclosed.

There could be different types of multipath propagation channel models used by the signal generator 200 when generating the test signals in step S102. According to an embodiment the multipath propagation channel model is a fast fading channel model. Further, noise, such as AWGN could be added to the test signal before being transmitted over the air to the radio communications device 300 in step S204.

There could be different types of data represented by the test signals. According to an embodiment each respective test signal comprises IQ samples or other type of data.

There could be different examples of physical environments in which the test signals can be transmitted by the signal generator 200 in step S204 and received by the transceiver device 300 in step S202. According to an embodiment the test signals are transmitted (step S104) and received (step S202) in a test facility with controllable echo. There are different examples of test facilities with controllable echo. Examples of such test facilities have been provided above with reference to Fig. 1.

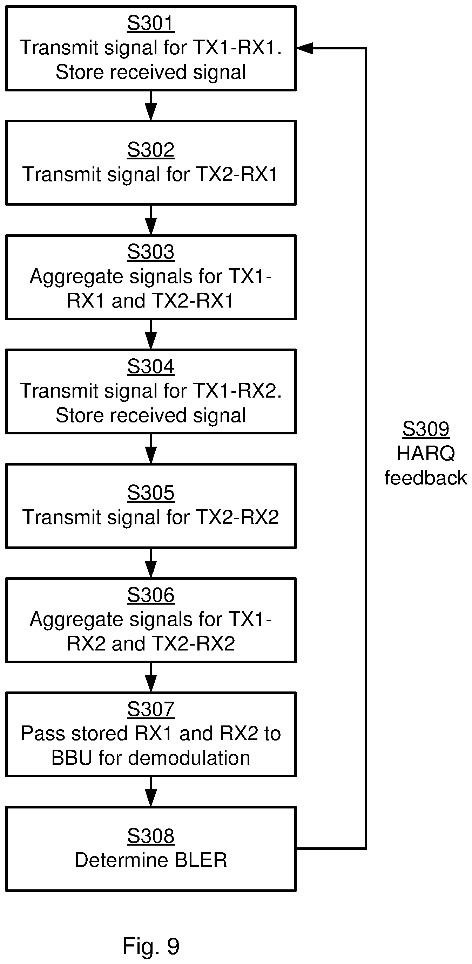

In Figs. 9, 10, and 11 the notations TXi, where i=1, 2, ...and RXj, where j=1, 2, ...are used to denote transmitter i of the signal generator 200 and receiver unit j of the radio communications device 300, respectively. As noted above, the signal generator 200 may comprise only a single transmitter but be configured to generate test signals representing two or more transmitters and thus represent two or more transmitters.

A first particular embodiment based on at least some of the above embodiments for over the air testing of a radio communications device 300 as performed by the signal generator 200 and the radio communications device 300 will now be disclosed with reference to the flowchart of Fig. 9. The embodiment of Fig. 9 represents a test case where the signal generator 200 represents two transmitter units (or simply, transmitters) and where the radio communications device 300 has two receiver units (or simply, receivers).
S301: The signal generator 200 transmits the test signal for the combination TX1-RX1. The transceiver device 300 stores the received test signal.
S302: The signal generator 200 transmits the test signal for the combination TX2-RX1.
S303: The radio communications device 300 receives the test signal for the combination TX2-RX1 and aggregates this test signal with the stored test signal for the combination TX1-RX1.
S304: The signal generator 200 transmits the test signal for the combination TX1-RX2. The transceiver device 300 stores the received test signal.
S305: The signal generator 200 transmits the test signal for the combination TX2-RX2.
S306: The radio communications device 300 receives the test signal for the combination TX2-RX2 and aggregates this test signal with the stored test signal for the combination TX1-RX2.
307: The radio communications device 300 passes the received aggregated test signals for all RX (i.e., one aggregated signal per RX) to the BBU 304 for demodulation.
S308: The BBU 304 of the radio communications device 300 demodulates the aggregated received test signals and determines the BLER.
S309: The radio communications device 300 transmits HARQ feedback to the signal generator 200 and step S301 is thus entered once again (where the signal generator 200 may adapt the test signals based on the HARQ feedback).

In test cases where the signal generator 200 represents more than two transmitters and/or the radio communications device 300 comprises more than two receiver units, respectively, steps S301-S303 are repeated for all such combinations.

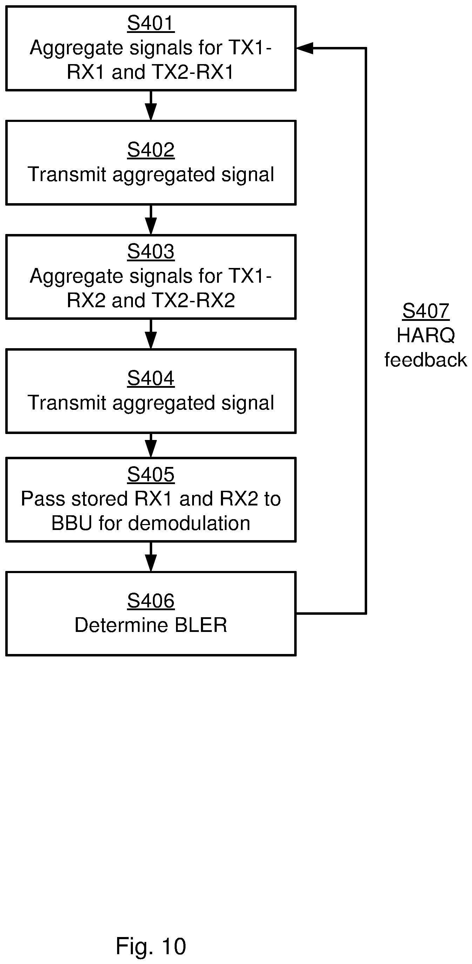

A second particular embodiment based on at least some of the above embodiments for over the air testing of a radio communications device 300 as performed by the signal generator 200 and the radio communications device 300 will now be disclosed with reference to the flowchart of Fig. 10. The embodiment of Fig. 10 represents a test case where the signal generator 200 represents two transmitter units (or simply, transmitters) and where the radio communications device 300 has two receiver units (or simply, receivers) and where test signals are aggregated in the signal generator 200 before transmission.
S401: The test generator 200 generates and then aggregates the test signals for the combinations TX1-RX1 and TX2-RX1.
S402: The signal generator 200 transmits the aggregated test signal for the combination TX1-RX1 and TX2-RX1.
S403: The test generator 200 generates and then aggregates the test signals for the combinations TX1-RX2 and TX2-RX2.
S404: The signal generator 200 transmits the aggregated test signal for the combination TX1-RX2 and TX2-RX2.
S405: The radio communications device 300 passes the received test signals to the BBU 304 for demodulation.
S406: The BBU 304 of the radio communications device 300 demodulates the received test signals and determines the BLER.
S407: The radio communications device 300 transmits HARQ feedback to the signal generator 200 and step S401 is thus entered once again (where the signal generator 200 may adapt the test signals based on the HARQ feedback).

In test cases where the signal generator 200 represents more than two transmitters and/or the radio communications device 300 comprises more than two receiver units, respectively, steps S401-S402 are repeated for all such combinations.

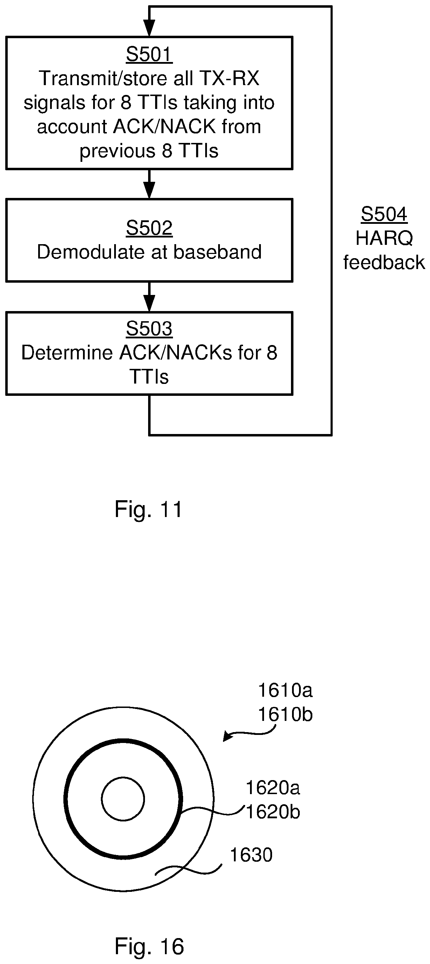

A third particular embodiment based on at least some of the above embodiments for over the air testing of a radio communications device 300 as performed by the signal generator 200 and the radio communications device 300 will now be disclosed with reference to the flowchart of Fig. 11. The embodiment of Fig. 11 represents a test case for determining HARQ feedback.

S501: The signal generator 200 transmits test signals for all combinations TXi-RXj for 8 transmission time intervals (TTIs), where the signal generator 200 generates the test signals based on the ACK/NACK protocol messages for the test signals transmitted in the most previous 8 TTIs. The radio communications device 300 receives the test signals for all combinations TXi-RXj.

S502: The radio communications device 300 demodulates the received test signals for the 8 TTIs.

S503: The radio communications device 300 determines ACK/NACK protocol messages for the test signals in the 8 TTIs in order to generate HARQ feedback.

S504: The radio communications device 300 transmits HARQ feedback to the signal generator 200 and step S501 is thus entered once again (where the signal generator 200 adapts the test signals for the next 8 TTIs based on the HARQ feedback).

The herein disclosed embodiments have mainly been disclosed for OTA testing of a radio communications device 300 representing a base station. One reason is that the procedure is carried out in non-real time and will require sufficient storage or an interface to a storage module. Also, the testing might not be carried out in the context of a call. Testing in this manner could therefore deviate from the usual methods of wireless transceiver device demodulation testing, although a wireless transceiver device could be tested as defined by the herein disclosed embodiments (with a modified test procedure and scope). Examples of such wireless transceiver devices are provided below.

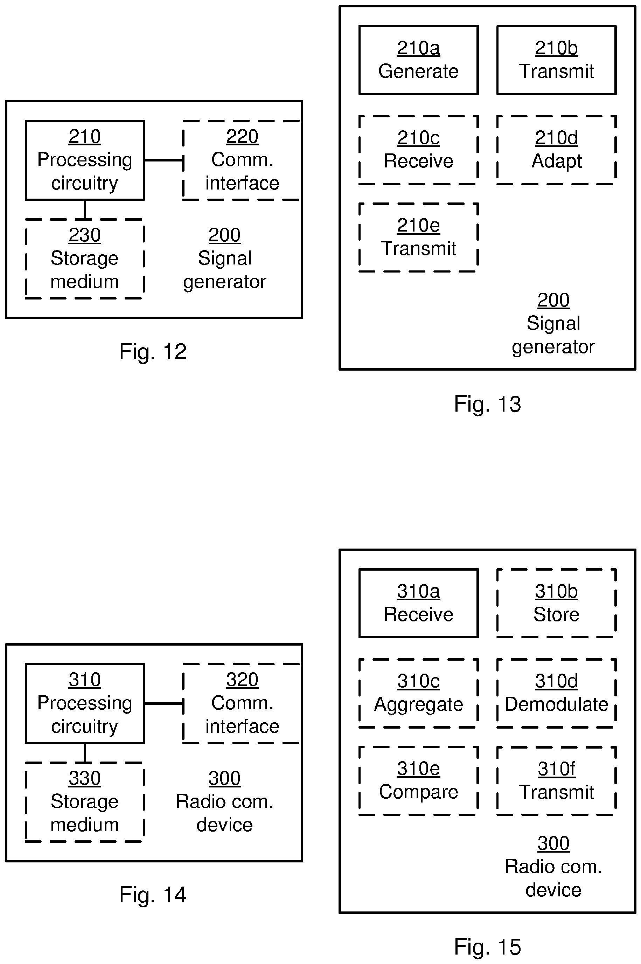

Fig. 12 schematically illustrates, in terms of a number of functional units, the components of a signal generator 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 1610a (as in Fig. 16), e.g. in the form of a storage medium 230. The processing circuitry 210 may further be provided as at least one application specific integrated circuit (ASIC), or field programmable gate array (FPGA).

Particularly, the processing circuitry 210 is configured to cause the signal generator 200 to perform a set of operations, or steps, S102-S110, as disclosed above. For example, the storage medium 230 may store the set of operations, and the processing circuitry 210 may be configured to retrieve the set of operations from the storage medium 230 to cause the signal generator 200 to perform the set of operations. The set of operations may be provided as a set of executable instructions. Thus the processing circuitry 210 is thereby arranged to execute methods as herein disclosed.

The storage medium 230 may also comprise persistent storage, which, for example, can be any single one or combination of magnetic memory, optical memory, solid state memory or even remotely mounted memory.

The signal generator 200 may further comprise a communications interface 220 for communications with the radio communications device 300. As such the communications interface 220 may comprise one or more transmitters and receivers, comprising analogue and digital components and a suitable number of antennas for wireless communications and ports for wireline communications.

The processing circuitry 210 controls the general operation of the signal generator 200 e.g. by sending data and control signals to the communications interface 220 and the storage medium 230, by receiving data and reports from the communications interface 220, and by retrieving data and instructions from the storage medium 230. Other components, as well as the related functionality, of the signal generator 200 are omitted in order not to obscure the concepts presented herein.

Fig. 13 schematically illustrates, in terms of a number of functional modules, the components of a signal generator 200 according to an embodiment. The signal generator 200 of Fig. 13 comprises a number of functional modules; a generate module 210a configured to perform step S102, and a transmit module 210b configured to perform step S204. The signal generator 200 of Fig. 13 may further comprise a number of optional functional modules, such as any of a receive module 210c configured to perform step S106, an adapt module 210d configured to perform step S108, and a transmit module 210e configured to perform step S110. In general terms, each functional module 210a-210e maybe implemented in hardware or in software. Preferably, one or more or all functional modules 210a-210e may be implemented by the processing circuitry 210, possibly in cooperation with functional units 220 and/or 230. The processing circuitry 210 may thus be arranged to from the storage medium 230 fetch instructions as provided by a functional module 210a-210e and to execute these instructions, thereby performing any steps of the signal generator 200 as disclosed herein.

Fig. 14 schematically illustrates, in terms of a number of functional units, the components of a radio communications device 300 according to an embodiment. Processing circuitry 310 is provided using any combination of one or more of a suitable central processing unit (CPU), multiprocessor, microcontroller, digital signal processor (DSP), etc., capable of executing software instructions stored in a computer program product 1610b (as in Fig. 16), e.g. in the form of a storage medium 330. The processing circuitry 310 may further be provided as at least one application specific integrated circuit (ASIC), or field programmable gate array (FPGA).

Particularly, the processing circuitry 310 is configured to cause the radio communications device 300 to perform a set of operations, or steps, S202-S212, as disclosed above. For example, the storage medium 330 may store the set of operations, and the processing circuitry 310 may be configured to retrieve the set of operations from the storage medium 330 to cause the radio communications device 300 to perform the set of operations. The set of operations may be provided as a set of executable instructions. Thus the processing circuitry 310 is thereby arranged to execute methods as herein disclosed.

The storage medium 330 may also comprise persistent storage, which, for example, can be any single one or combination of magnetic memory, optical memory, solid state memory or even remotely mounted memory.

The radio communications device 300 may further comprise a communications interface 320 for communications with the signal generator 200. As such the communications interface 320 may comprise one or more transmitters and receivers, comprising analogue and digital components and a suitable number of antennas for wireless communications and ports for wireline communications.

The processing circuitry 310 controls the general operation of the radio communications device 300 e.g. by sending data and control signals to the communications interface 320 and the storage medium 330, by receiving data and reports from the communications interface 320, and by retrieving data and instructions from the storage medium 330. Other components, as well as the related functionality, of the radio communications device 300 are omitted in order not to obscure the concepts presented herein.

Fig. 15 schematically illustrates, in terms of a number of functional modules, the components of a radio communications device 300 according to an embodiment. The radio communications device 300 of Fig. 15 comprises a receive module 310a configured to perform step S202. The radio communications device 300 of Fig. 15 may further comprises a number of optional functional modules, such as any of a store module 310b configured to perform step S204, an aggregate module 310c configured to perform step S206, a demodulate module 310d configured to perform step S208, a compare module 310e configured to perform step S210, and a transmit module 310f configured to perform step S212. In general terms, each functional module 310a-310f may be implemented in hardware or in software. Preferably, one or more or all functional modules 310a-310f may be implemented by the processing circuitry 310, possibly in cooperation with functional units 320 and/ or 330. The processing circuitry 310 may thus be arranged to from the storage medium 330 fetch instructions as provided by a functional module 310a-310f and to execute these instructions, thereby performing any steps of the radio communications device 300 as disclosed herein.

The radio communications device 300 may be represented by, or be part of, a base station, such as a radio access network node, radio base station, base transceiver station, node B, evolved node B, or access point. Alternatively, the radio communications device 300 may be represented by, or be part of, a wireless transceiver devices such as a portable wireless device, mobile station, mobile phone, handset, wireless local loop phone, user equipment (UE), smartphone, laptop computer, tablet computer, broadband modem, or network equipped sensor. In further aspects, the signal generator 200 and/or radio communications device 300 may each be provided as a standalone device or as a part of at least one further device. Alternatively, functionality of each of the signal generator 200 and/or radio communications device 300 may be distributed between at least two devices, or nodes. Thus, a first portion of the instructions performed by the signal generator 200 and/ or radio communications device 300 may be executed in a respective first device, and a second portion of the of the instructions performed by the signal generator 200 and/or radio communications device 300 may be executed in a respective second device; the herein disclosed embodiments are not limited to any particular number of devices on which the instructions performed by the signal generator 200 and/or radio communications device 300 may be executed. Hence, the methods according to the herein disclosed embodiments are suitable to be performed by a signal generator 200 and/or radio communications device 300 residing in a cloud computational environment. Therefore, although a single processing circuitry 210, 310 is illustrated in Figs. 12 and 14 the processing circuitry 210, 310 may be distributed among a plurality of devices, or nodes. The same applies to the functional modules 210a-210e, 310a-310f of Figs. 13 and 15 and the computer programs 1620a, 1620b of Fig. 16 (see below). Especially, in terms of the radio communications device 300, there could be an integrated antenna/radio unit that transmits and receives signals and a separate baseband unit performing baseband processing elsewhere. In this respect the baseband processing can be performed in a BBU of a baseband hotel.

Fig. 16 shows one example of a computer program product 1610a, 1610b comprising computer readable means 1630. On this computer readable means 1630, a computer program 1620a can be stored, which computer program 1620a can cause the processing circuitry 210 and thereto operatively coupled entities and devices, such as the communications interface 220 and the storage medium 230, to execute methods according to embodiments described herein. The computer program 1620a and/or computer program product 1610a may thus provide means for performing any steps of the signal generator 200 as herein disclosed. On this computer readable means 1630, a computer program 1620b can be stored, which computer program 1620b can cause the processing circuitry 310 and thereto operatively coupled entities and devices, such as the communications interface 320 and the storage medium 330, to execute methods according to embodiments described herein. The computer program 1620b and/or computer program product 1610b may thus provide means for performing any steps of the radio communications device 300 as herein disclosed.

In the example of Fig. 16, the computer program product 1610a, 1610b is illustrated as an optical disc, such as a CD (compact disc) or a DVD (digital versatile disc) or a Blu-Ray disc. The computer program product 1610a, 1610b could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 1620a, 1620b is here schematically shown as a track on the depicted optical disk, the computer program 1620a, 1620b can be stored in any way which is suitable for the computer program product 1610a, 1610b.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method for over the air testing of a radio communications device (300), the method being performed by a signal generator (200) comprising only a single antenna element, the method comprising:
generating (S102) a respective test signal for each of a plurality of receiver units of the radio communications device, wherein each test signal is independently modulated according to a multipath propagation channel model, wherein each respective test signal is an aggregated test signal consisting of test signal contributions from at least two transmitters added together; and
sequentially, and for the plurality of receiver units of the radio communications device, by the single antenna element, transmitting (S104) the test signals over the air.

2. The method according to claim 1, wherein each test signal is independently modulated according to a correlation, coupling, and/or combining model capturing antenna spacing, antenna correlation, and/or properties of a Radio Distribution Network in the radio communications device.

3. The method according to any of claims 1-2, wherein each test signal is independently modulated according to a correlation model capturing transmitter correlation.

4. The method according to any of claims 1-3, further comprising:
receiving (S106) a response from the radio communications device, the response comprising an Acknowledgement, ACK, protocol message or a Negative Acknowledgement, NACK, message;
adapting (S108) said respective test signal according to the received response; and
sequentially, and for the plurality of receiver units of the radio communications device, transmitting (S110) adapted test signals over the air.

5. The method according to any of claims 1-4, wherein the test signals are transmitted in a test facility with controllable echo.

6. A method for over the air testing of a radio communications device (300), the method comprising:
sequentially receiving (S202) by the radio communications device a respective test signal for each of a plurality of receiver units of the radio communications device over the air from a signal generator (200) comprising only a single antenna element, wherein each respective test signal is independently modulated according to a multipath propagation channel model, wherein each respective test signal is an aggregated test signal consisting of test signal contributions from at least two transmitters added together.

7. The method according to claim 6, further comprising:
demodulating (S208) the aggregated test signals.

8. The method according to claim 7, further comprising:
transmitting (S212) a response to the signal generator when having demodulated the aggregated test signals, the response comprising an Acknowledgement, ACK, protocol message or a Negative Acknowledgement, NACK, protocol message and being dependent on the demodulated test signals.

9. The method according to claim 7 or 8, further comprising:
facilitating comparison (S210) of the demodulated test signal to a demodulation requirement.

10. The method according to claim 6, wherein the radio communications device is set in an uplink receive only mode, and wherein the radio communications device has its scheduling functionality disabled when sequentially receiving said respective test signal.

11. The method according to claim 7, further comprising:
storing (S204) each respective sequentially received test signal before said demodulating.

12. The method according to claim 6, wherein the test signals are received in a test facility with controllable echo.

13. The method according to claim 12, wherein the test facility is an anechoic chamber, a compact antenna test range, a near-field test facility, a far-field test facility, or an outdoor test facility.

14. The method according to any of the preceding claims, wherein multipath propagation channel model is a fast fading channel model.

15. The method according to any of the preceding claims, wherein each respective test signal comprises inphase and quadrature samples.

16. A signal generator (200) for over the air testing of a radio communications device (300), the signal generator (200) comprising only a single antenna element configured to generate test signals, the signal generator further comprising:
processing circuitry (210); and
a computer program product (1610a) storing instructions that, when executed by the processing circuitry (210), causes the signal generator (200) to:
generate a respective test signal for each of a plurality of receiver units of the radio communications device, wherein each test signal is independently modulated according to a multipath propagation channel model, wherein each respective test signal is an aggregated test signal consisting of test signal contributions from at least two transmitters added together; and
sequentially, and for the plurality of receiver units of the radio communications device, by the single antenna element, transmit the test signals over the air.

17. A computer program product (1620a) comprising a computer program stored in a computer readable storage medium (1630), for over the air testing of a radio communications device (300), the computer program comprising computer code which, when run on processing circuitry (210) of a signal generator (200) comprising only a single antenna element, causes the signal generator (200) to:
generate (S102) a respective test signal for each of a plurality of receiver units of the radio communications device, wherein each test signal is independently modulated according to a multipath propagation channel model, wherein each respective test signal is an aggregated test signal consisting of a test signal contributions from at least two transmitters added together; and
sequentially, and for the plurality of receiver units of the radio communications device, by the single antenna element, transmit (S104) the test signals over the air.

## Patentansprüche

1. Verfahren zum Testen einer Funkkommunikationsvorrichtung (300) über Funk, wobei das Verfahren von einem Signalgenerator (200) durchgeführt wird, der nur ein einzelnes Antennenelement umfasst, wobei das Verfahren Folgendes umfasst:
Erzeugen (S102) eines jeweiligen Testsignals für jede einer Vielzahl von Empfängereinheiten der Funkkommunikationsvorrichtung, wobei jedes Testsignal unabhängig gemäß einem Mehrwegeausbreitungskanalmodell moduliert wird, wobei jedes jeweilige Testsignal ein aggregiertes Testsignal ist, das aus Testsignalbeiträgen von mindestens zwei zusammenaddierten Sendern besteht; und
nacheinander und für die Vielzahl von Empfängereinheiten der Funkkommunikationsvorrichtung durch das einzelne Antennenelement, Senden (S104) der Testsignale über Funk.

2. Verfahren nach Anspruch 1, wobei jedes Testsignal unabhängig gemäß einem Korrelations-, Kopplungs- und/oder Kombinationsmodell moduliert wird, das den Antennenabstand, die Antennenkorrelation und/oder die Eigenschaften eines Funkverteilungsnetzwerks in der Funkkommunikationsvorrichtung erfasst.

3. Verfahren nach einem der Ansprüche 1 bis 2, wobei jedes Testsignal unabhängig gemäß einem Korrelationsmodell moduliert wird, das die Senderkorrelation erfasst.

4. Verfahren nach einem der Ansprüche 1 bis 3, das ferner Folgendes umfasst:
Empfangen (S106) einer Antwort von der Funkkommunikationsvorrichtung, wobei die Antwort eine Bestätigungs- (Acknowledgement, ACK) Protokollnachricht oder eine negative Bestätigungs- (NACK) Nachricht umfasst;
Anpassen (S108) des jeweiligen Testsignals gemäß der empfangenen Antwort; und
nacheinander und für die Vielzahl von Empfängereinheiten der Funkkommunikationsvorrichtung, Senden (S110) der angepassten Testsignale über Funk.

5. Verfahren nach einem der Ansprüche 1 bis 4, wobei die Testsignale in einer Testeinrichtung mit steuerbarem Echo übertragen werden.

6. Verfahren zum Testen einer Funkkommunikationsvorrichtung (300) über Funk, wobei das Verfahren Folgendes umfasst:
sequentielles Empfangen (S202), durch die Funkkommunikationsvorrichtung, eines entsprechenden Testsignals für jede der Vielzahl von Empfängereinheiten der Funkkommunikationsvorrichtung über Funk von einem Signalgenerator (200), das nur ein einziges Antennenelement umfasst, wobei jedes jeweilige Testsignal unabhängig gemäß einem Mehrwegeausbreitungskanalmodell moduliert wird, wobei jedes jeweilige Testsignal ein aggregiertes Testsignal ist, das aus Testsignalbeiträgen von mindestens zwei zusammenaddierten Sendern besteht.

7. Verfahren nach Anspruch 6, das ferner Folgendes umfasst:
Demodulieren (S208) der aggregierten Testsignale.

8. Verfahren nach Anspruch 7, das ferner Folgendes umfasst:
Senden (S212) einer Antwort an den Signalgenerator, wann die aggregierten Testsignale demoduliert wurden, wobei die Antwort eine Bestätigungs-, ACK-, Protokollnachricht oder eine negative Bestätigungs-, NACK-, Protokollnachricht umfasst und von den demodulierten Testsignalen abhängig ist.

9. Verfahren nach Anspruch 7 oder 8, das ferner Folgendes umfasst:
Ermöglichen des Vergleichs (S210) des demodulierten Testsignals mit einer Demodulationsanforderung.

10. Verfahren nach Anspruch 6, wobei die Funkkommunikationsvorrichtung auf einen Nur-Uplink-Empfangsmodus eingestellt ist, und wobei die Planungsfunktionalität der Funkkommunikationsvorrichtung deaktiviert ist, wenn das jeweilige Testsignal nacheinander empfangen wird.

11. Verfahren nach Anspruch 7, das ferner Folgendes umfasst:
Speichern (S204) jedes jeweiligen nacheinander empfangenen Testsignals vor der Demodulation.

12. Verfahren nach Anspruch 6, wobei die Testsignale in einer Testeinrichtung mit steuerbarem Echo empfangen werden.

13. Verfahren nach Anspruch 12, wobei die Testanlage eine schalltote Kammer, eine kompakte Antennenteststrecke, eine Nahfeldtestanlage, eine Fernfeldtestanlage oder eine Außenprüfanlage ist.

14. Verfahren nach einem der vorhergehenden Ansprüche, wobei das Mehrwegeausbreitungskanalmodell ein schnell verblassendes Kanalmodell ist.

15. Verfahren nach einem der vorhergehenden Ansprüche, wobei jedes jeweilige Testsignal Inphasen- und Quadraturabtastwerte umfasst.

16. Signalgenerator (200) zum Testen einer Funkkommunikationsvorrichtung (300) über Funk, wobei der Signalgenerator (200) nur ein einzelnes Antennenelement umfasst, das zum Erzeugen von Testsignalen konfiguriert ist, wobei der Signalgenerator ferner Folgendes umfasst:
eine Verarbeitungsschaltung (210); und
ein Computerprogrammprodukt (1610a), das Anweisungen speichert, die, wenn sie von der Verarbeitungsschaltung (210) ausgeführt werden, bewirken, dass der Signalgenerator (200) Folgendes ausführt:
Erzeugen eines jeweiligen Testsignals für jede einer Vielzahl von Empfängereinheiten der Funkkommunikationsvorrichtung, wobei jedes Testsignal unabhängig gemäß einem Mehrwegeausbreitungskanalmodell moduliert wird, wobei jedes jeweilige Testsignal ein aggregiertes Testsignal ist, das aus Testsignalbeiträgen von mindestens zwei zusammenaddierten Sendern besteht; und
nacheinander und für die Vielzahl von Empfängereinheiten der Funkkommunikationsvorrichtung durch das einzelne Antennenelement, Senden der Testsignale über Funk.

17. Computerprogrammprodukt (1620a), das ein Computerprogramm umfass, das in einem computerlesbaren Speichermedium (1630) gespeichert ist, zum Testen einer Funkkommunikationsvorrichtung (300) über Funk, wobei das Computerprogramm einen Computercode umfasst, der, wenn er auf einer Verarbeitungsschaltung (210) eines Signalgenerators (200) ausgeführt wird, der nur ein einziges Antennenelement umfasst, bewirkt, dass der Signalgenerator (200) Folgendes ausführt:
Erzeugen (S102) eines jeweiligen Testsignals für jede einer Vielzahl von Empfängereinheiten der Funkkommunikationsvorrichtung, wobei jedes Testsignal unabhängig gemäß einem Mehrwegeausbreitungskanalmodell moduliert wird, wobei jedes jeweilige Testsignal ein aggregiertes Testsignal ist, das aus Testsignalbeiträgen von mindestens zwei zusammenaddierten Sendern besteht; und
nacheinander und für die Vielzahl von Empfängereinheiten der Funkkommunikationsvorrichtung durch das einzelne Antennenelement, Senden (S104) der Testsignale über Funk.

## Revendications

1. Procédé pour réaliser des essais par liaison radio sur un dispositif de communication radio (300), le procédé étant réalisé par un générateur de signal (200) comprenant seulement un élément antenne unique, le procédé comprenant :
la génération (S102) d'un signal d'essai respectif pour chacune d'une pluralité d'unités réceptrices du dispositif de communication radio, dans lequel chaque signal d'essai est indépendamment modulé selon un modèle de canal de propagation multivoie, dans lequel chaque signal d'essai respectif est un signal d'essai agrégé constitué de contributions de signal d'essai provenant d'au moins deux transmetteurs combinés ; et
séquentiellement, et pour la pluralité d'unités réceptrices du dispositif de communication radio, par l'élément antenne unique, la transmission (S104) des signaux d'essai par liaison radio.

2. Procédé selon la revendication 1, dans lequel chaque signal d'essai est indépendamment modulé selon un modèle de corrélation, de couplage, et/ou de combinaison capturant un espacement d'antenne, une corrélation d'antenne, et/ou des propriétés d'un réseau de distribution radio dans le dispositif de communication radio.

3. Procédé selon l'une quelconque des revendications 1 et 2, dans lequel chaque signal d'essai est indépendamment modulé selon un modèle de corrélation capturant une corrélation de transmetteur.

4. Procédé selon l'une quelconque des revendications 1 à 3, comprenant en outre :
la réception (S106) d'une réponse à partir du dispositif de communication radio, la réponse comprenant un message de protocole d'accusé de réception, ACK, ou un message d'accusé de réception négatif, NACK ;
l'adaptation (S108) dudit signal d'essai respectif selon la réponse reçue ; et
séquentiellement, et pour la pluralité d'unités réceptrices du dispositif de communication radio, la transmission (S110) de signaux d'essai adaptés par liaison radio.

5. Procédé selon l'une quelconque des revendications 1 à 4, dans lequel les signaux d'essai sont transmis dans une installation d'essai avec un écho contrôlable.

6. Procédé pour réalisation d'essais par liaison radio d'un dispositif de communication radio (300), le procédé comprenant :
séquentiellement, la réception (S202), par le dispositif de communication radio, d'un signal d'essai respectif pour chacune d'une pluralité d'unités réceptrices du dispositif de communication radio par liaison radio à partir d'un générateur de signal (200) comprenant seulement un élément antenne unique, dans lequel chaque signal d'essai respectif est indépendamment modulé selon un modèle de canal de propagation multivoie, dans lequel chaque signal d'essai respectif est un signal d'essai agrégé constitué de contributions de signal d'essai provenant d'au moins deux transmetteurs combinés.

7. Procédé selon la revendication 6, comprenant en outre :
la démodulation (S208) des signaux d'essai agrégés.

8. Procédé selon la revendication 7, comprenant en outre :
la transmission (S212) d'une réponse au générateur de signal après la démodulation des signaux d'essai agrégés, la réponse comprenant un message de protocole d'accusé de réception, ACK, ou un message de protocole d'accusé de réception négatif, NACK, et étant dépendante des signaux d'essai démodulés.

9. Procédé selon la revendication 7 ou 8, comprenant en outre :
la facilitation de comparaison (S210) du signal d'essai démodulé à une exigence de démodulation.

10. Procédé selon la revendication 6, dans lequel le dispositif de communication radio est réglé dans un mode seulement de réception de liaison montante, et dans lequel le dispositif de communication radio a sa fonctionnalité d'ordonnancement désactivée lors de la réception, séquentiellement, dudit signal d'essai respectif.

11. Procédé selon la revendication 7, comprenant en outre :
le stockage (S204) de chaque signal d'essai respectif reçu séquentiellement avant ladite démodulation.

12. Procédé selon la revendication 6, dans lequel les signaux d'essai sont reçus dans une installation d'essai avec un écho contrôlable.

13. Procédé selon la revendication 12, dans lequel l'installation d'essai est une chambre anéchoïque, une aire d'essai d'antenne compacte, une installation d'essai en champ proche, une installation d'essai en champ éloigné, ou une installation d'essai en extérieur.

14. Procédé selon l'une quelconque des revendications précédentes, dans lequel le modèle de canal de propagation multivoie est un modèle de canal à évanouissement rapide.

15. Procédé selon l'une quelconque des revendications précédentes, dans lequel chaque signal d'essai respectif comprend des échantillons en phase et en quadrature.

16. Générateur de signal (200) pour réaliser des essais par liaison radio sur un dispositif de communication radio (300), le générateur de signal (200) comprenant seulement un élément antenne unique configuré pour générer des signaux d'essai, le générateur de signal comprenant en outre :
une circuiterie de traitement (210) ; et
un produit programme d'ordinateur (1610a) stockant des instructions qui, lorsqu'elles sont exécutées par le circuiterie de traitement (210), fait en sorte que le générateur de signal (200) :
génère un signal d'essai respectif pour chacune d'une pluralité d'unités réceptrices du dispositif de communication radio, dans lequel chaque signal d'essai est indépendamment modulé selon un modèle de canal de propagation multivoie, dans lequel chaque signal d'essai respectif est un signal d'essai agrégé constitué de contributions de signal d'essai provenant d'au moins deux transmetteurs combinés ; et
séquentiellement, et pour la pluralité d'unités réceptrices du dispositif de communication radio, par l'intermédiaire de l'élément antenne unique, transmette les signaux d'essai par liaison radio.

17. Produit programme d'ordinateur (1620a) comprenant un programme d'ordinateur stocké dans un support de stockage lisible par ordinateur (1630), pour réaliser des essais par liaison radio sur un dispositif de communication radio (300), le programme d'ordinateur comprenant un code d'ordinateur qui, lorsqu'il est exécuté sur une circuiterie de traitement (210) d'un générateur de signal (200) comprenant seulement un élément antenne unique, fait en sorte que le générateur de signal (200) :
génère (S102) un signal d'essai respectif pour chacune d'une pluralité d'unités réceptrices du dispositif de communication radio, dans lequel chaque signal d'essai est indépendamment modulé selon un modèle de canal de propagation multivoie, dans lequel chaque signal d'essai respectif est un signal d'essai agrégé constitué de contributions de signal d'essai provenant d'au moins deux transmetteurs combinés ; et
séquentiellement, et pour la pluralité d'unités réceptrices du dispositif de communication radio, par l'intermédiaire de l'élément antenne unique, transmette (S104) les signaux d'essai par liaison radio.
